# FASCICULE DE BREVET EUROPEEN

(11) **EP 2 870 051 B1**
(45) Date de publication et mention de la délivrance du brevet: **07.12.2016**
(21) Numéro de dépôt: 13739770.9
(22) Date de dépôt: 03.07.2013
(51) Int. Cl.: B62D 5/04

(54) **PROCÉDÉ DE CENTRAGE DU VOLANT DE CONDUITE D'UNE DIRECTION ASSISTÉE DE VÉHICULE AUTOMOBILE**
VERFAHREN ZUR ZENTRIERUNG DES LENKRADS EINER SERVOLENKUNG EINES KRAFTFAHRZEUGS
METHOD FOR CENTRING THE STEERING WHEEL OF A MOTOR VEHICLE POWER ASSISTED STEERING

(30) Priorité: 04.07.2012 FR 1256415
(43) Date de publication de la demande: 13.05.2015
(73) Titulaire: JTEKT Europe, 69540 Irigny (FR)
(72) Inventeur: LENGRAIS, Guillaume, F-69003 Lyon (FR); GASSMANN, François, F-26260 Clerieux (FR); MICHELIS, André, FR-38121 CHONAS L'AMBALLAN (FR)
(74) Mandataire: Chevalier, Renaud Philippe
(86) Numéro de dépôt international: PCT/FR2013/051572
(87) Numéro de publication internationale: WO 2014/006331

(56) Documents cités:
- EP-A1- 1 036 727
- DE-A1-102004 060 030
- DE-A1-102010 048 261

## Description

La présente invention se rapporte au domaine général des dispositifs et procédés d'assistance à la conduite d'un véhicule automobile, destinés à faciliter et sécuriser la manoeuvre d'un tel véhicule.

Elle concerne plus particulièrement un procédé d'assistance à la manoeuvre d'un volant de conduite afin d'assister le rappel dudit volant vers une position centrale prédéterminée, par exemple au sein d'un système de direction assistée, notamment de direction assistée électrique.

On connaît des systèmes d'assistance de direction qui, lorsque le volant de conduite est tourné et que le véhicule est en mouvement, restituent au niveau dudit volant de conduite, notamment par l'intermédiaire du moteur d'assistance de direction, un effort de rappel qui tend à rappeler spontanément ledit volant vers sa position centrale neutre, et ce afin de procurer au conducteur un meilleur ressenti des conditions de roulage.

En particulier, on connaît par le document EP-1 036 727 un système d'assistance qui correspond au préambule de la revendication 1.

Cependant, si la restitution d'un tel effort de rappel donne généralement satisfaction, en contribuant à améliorer le confort et la sécurité de la conduite, elle peut toutefois souffrir de certaines limitations.

En effet, les inventeurs ont constaté que les systèmes connus pouvaient parfois être pris en défaut, dans certaines situations dans lesquelles le phénomène de centrage naturel a tendance à être atténué.

Ceci peut notamment se produire au sein de véhicules à propulsion qui possèdent un moteur monté à l'arrière, et dont le train avant directionnel tend de ce fait à être moins sollicité, ce qui rend la direction moins sujette au phénomène de centrage spontané.

Si un tel manque d'effort de centrage peut être en partie compensé, en régime établi, par l'effet de chasse du train avant, lorsque celui-ci présente un angle de chasse positif, par des stratégies usuelles de rappel volant, il n'en va pas de même en phase d'accélération, en raison de l'allègement dynamique supplémentaire que subit ledit train avant du fait de l'accélération.

Les sensations du conducteur, et plus globalement l'assistance à la conduite, peuvent alors être plus ou moins faussées, au préjudice éventuel de la maîtrise du comportement du véhicule.

Les objets assignés à l'invention visent par conséquent à remédier aux inconvénients susmentionnés et à proposer un nouveau procédé d'assistance de direction qui assure un contrôle, et notamment un centrage, particulièrement efficace et fiable de la direction, et qui procure un rendu fidèle du comportement du véhicule, quelle que soit situation de vie dudit véhicule.

Les objets assignés à l'invention sont atteints au moyen d'un procédé d'assistance à la manoeuvre d'un volant de conduite de véhicule, au cours duquel on élabore une consigne de rappel quantifiant un effort de rappel destiné à être appliqué audit volant de conduite afin d'assister le rappel dudit volant vers une position centrale prédéterminée, ledit procédé étant caractérisé en ce qu'il comporte au moins une étape (a) de détermination d'accélération longitudinale au cours de laquelle on évalue l'accélération longitudinale instantanée du véhicule, puis une étape (b) d'adaptation de consigne de rappel au cours de laquelle on ajuste la consigne de rappel du volant en fonction de ladite accélération longitudinale instantanée.

Avantageusement, en modifiant dynamiquement l'effort de rappel du volant, et plus particulièrement en intensifiant ledit effort de rappel lorsque le niveau d'accélération augmente, le procédé conforme à l'invention permet de compenser efficacement, de manière artificielle, la réduction de l'effet de centrage réel provoquée par l'allègement du train avant directionnel.

Ainsi, ledit procédé assure la continuité et l'efficacité du centrage du volant, et plus globalement du centrage de la direction dans son ensemble, et notamment des roues directionnelles, tout en garantissant une bonne perception dudit effet de centrage, et donc, plus largement, du comportement du train directionnel.

Il procure de ce fait un meilleur contrôle du véhicule, à la fois plus fiable et plus intuitif, quelles que soient les conditions dans lesquelles progresse ledit véhicule, et en particulier lors des phases d'accélération soutenue de ce dernier.

Ledit procédé conforme à l'invention permet donc d'accroître significativement le confort et la sécurité de la conduite en toutes circonstances, et ce avantageusement de manière particulièrement simple et peu onéreuse, sans induire d'alourdissement ou de complication de l'architecture du véhicule.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :
La figure 1 illustre, selon une vue schématique de côté, un véhicule à chasse positive équipé d'un système d'assistance de direction permettant de mettre en oeuvre un procédé conforme à l'invention.
La figure 2 illustre, selon un schéma-bloc fonctionnel, le déroulement d'un procédé de compensation du centrage de volant de conduite conforme à l'invention.

La présente invention concerne un procédé d'assistance à la manoeuvre d'un volant de conduite 1 de véhicule.

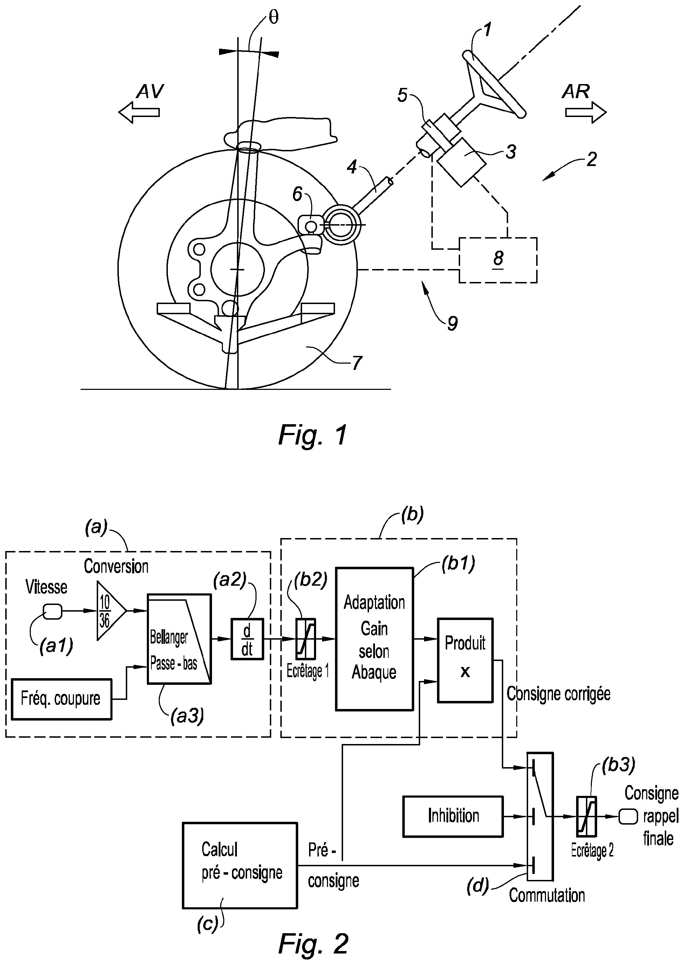

Ledit procédé trouve en particulier son application, tel que cela est illustré sur la figure 1, au sein d'un système de direction assistée 2, utilisant de préférence un moteur d'assistance électrique 3, par exemple couplé à la colonne de direction 4 par un réducteur 5 du type à roue tangente et vis sans fin.

De façon classique, la rotation de la colonne 4 entraîne de préférence un pignon qui engrène sur une crémaillère (non visible) montée à translation dans un carter, laquelle agit à son tour sur des biellettes 6, gauche et droite, pour orienter les roues 7 du train directionnel. Dans cet exemple, il s'agit du train avant, qui présente de préférence un angle de chasse θ positif.

Le système de direction assistée 2 comportera de préférence un calculateur 8 embarqué, conçu pour piloter le moteur d'assistance 3, et plus particulièrement pour appliquer audit moteur une consigne correspondant à un couple qui favorise ou au contraire qui résiste à la manoeuvre du volant 1, selon une ou plusieurs loi d'assistance prédéterminées.

Les échanges de données vers et depuis ledit calculateur 8 pourront avantageusement être assurés par un réseau informatique de bord 9, du genre CAN (Controller Area Network).

Au cours du procédé conforme à l'invention, on est notamment amené à élaborer une consigne de rappel (« *consigne rappel final »* sur la figure 2) qui quantifie un effort de rappel, et plus particulièrement un couple, destiné à être appliqué au volant 1 de conduite, le cas échéant par l'intermédiaire du moteur d'assistance 3 auquel sera appliqué ladite consigne puis de la colonne de direction 4 couplée audit moteur, et ce afin d'assister le rappel dudit volant 1 vers une position centrale prédéterminée.

Bien que ladite position centrale prédéterminée puisse être librement définie, celle-ci correspond de préférence sensiblement à la position neutre du volant, c'est-à-dire à une configuration du système de direction dans laquelle les roues du train roulant directionnel sont orientées en ligne droite, dans le sens longitudinal avant AV - arrière AR du véhicule.

Par ailleurs, le terme « *volant* », utilisé par commodité, n'est bien entendu nullement restrictif, et peut ici désigner tout dispositif permettant au conducteur du véhicule d'exercer un effort de commande sur la direction, tel qu'un volant annulaire conventionnel, éventuellement tronqué sur une partie de son périmètre, une barre de direction, un manche de type joystick, un pédalier de palonnier, etc.

Selon l'invention, et tel que cela est illustré sur la figure 2, le procédé comporte au moins une étape (a) de détermination d'accélération longitudinale au cours de laquelle on évalue l'accélération longitudinale instantanée du véhicule, puis une étape (b) d'adaptation de consigne de rappel au cours de laquelle on ajuste la consigne de rappel du volant en fonction de ladite accélération longitudinale instantanée.

Avantageusement, un tel procédé permet de prendre en considération, sensiblement en temps réel, le paramètre d'accélération longitudinale du véhicule, c'est-à-dire la composante d'accélération portée par la direction avant-arrière dudit véhicule et en principe sensiblement tangente à la trajectoire suivie, pour adapter et doser l'effort de rappel appliqué au volant en réponse au braquage de ce dernier, c'est-à-dire lorsque ledit volant est tourné dans une position angulaire distincte et plus ou moins éloignée de sa position centrale prédéterminée.

Ledit procédé permet plus particulièrement de renforcer la perception par le conducteur de l'effet de centrage, ainsi que l'action effective de centrage du volant 1, et plus globalement de la direction et du train roulant, lorsque le véhicule accélère.

Ainsi, on peut notamment compenser et corriger artificiellement et efficacement l'effet d'allègement dynamique auquel peut être sujet le train avant des véhicules, notamment ceux dont le moteur est placé à l'arrière, tels que les véhicules légers à propulsion.

Le cas échéant, cette intervention de la valeur d'accélération dans la définition de l'effort de centrage pourra s'appliquer dans les deux sens de déplacement, que le véhicule progresse en marche avant ou en marche arrière.

De préférence, au cours de l'étape (b) d'adaptation, on ajuste la consigne de rappel selon une fonction croissante de l'accélération longitudinale, de manière à augmenter l'intensité de l'effort de rappel si ladite accélération longitudinale augmente et/ou si ladite accélération longitudinale dépasse un seuil prédéterminé.

En d'autres termes, on pourra avantageusement bénéficier d'un renforcement progressif de l'effort de centrage, et en particulier d'une compensation active et progressive de l'amoindrissement de l'effort de centrage, ledit amoindrissement résultant de la réduction de l'effet naturel de centrage provoquée par l'allègement dynamique du train roulant directionnel, ladite compensation pouvant s'opérer selon une loi qui pourra être croissante avec l'accélération, soit continûment, et notamment linéairement, soit par morceaux (et notamment par paliers).

Par ailleurs, on pourra notamment prévoir un seuil de déclenchement de la compensation, le renforcement artificiel complémentaire de l'effort de l'appel intervenant seulement à partir d'un premier niveau d'accélération prédéterminé (valeur basse).

De même, on pourra envisager, notamment par sécurité afin d'éviter une surcompensation, un bornage supérieur du renforcement de l'effort de rappel, lorsque l'accélération longitudinale instantanée atteint ou dépasse un second niveau prédéterminé (valeur haute), supérieur au premier niveau.

De préférence, l'étape (b) d'adaptation comprend une sous-étape (b1) d'amplification variable au cours de laquelle on associe à la valeur d'accélération instantanée, selon une loi ou un abaque pré-établi, un gain d'amplification qui varie en fonction de ladite valeur d'accélération, puis on applique ledit gain à un signal de base formant une pré-consigne, de sorte à obtenir une consigne corrigée.

De préférence, ladite pré-consigne est quant à elle calculée indépendamment de l'accélération longitudinale, au cours d'une étape (c) de calcul de pré-consigne, sur la base d'un ou plusieurs (autres) paramètres de roulage tels que la vitesse du véhicule, la vitesse de rotation du volant, la position angulaire du volant et/ou le couple exercé par le conducteur sur le volant.

Au demeurant, quel que soit le mode de réalisation retenu, la pré-consigne et/ou la consigne corrigée pourront être définies en tenant compte notamment de la position angulaire du volant, et en particulier être d'autant plus élevées que le braquage du volant est marqué, c'est-à-dire que la position angulaire instantanée dudit volant est éloignée de sa position centrale.

Avantageusement, l'invention permet d'adapter très facilement la consigne de rappel, selon une correction de type proportionnelle, en multipliant la pré-consigne par un gain d'amplification qui est modifié notamment selon la valeur d'accélération instantanée, d'après une échelle prédéterminée du genre courbe, cartographie (« map ») ou abaque, avantageusement stockée dans une mémoire non volatile du calculateur 8.

Dans un exemple de réalisation, ledit gain pourra être strictement supérieur à 1, et atteindre 5 ou davantage.

De préférence, la pré-consigne et la consigne corrigée, ainsi que la consigne finale, seront des signaux de même nature, par exemple des « courants de rappel » dont l'intensité est représentative du couple de rappel que doit exercer le moteur d'assistance 3.

Il est du reste remarquable que l'étape (c) de calcul de pré-consigne peut correspondre à une étape déjà existante au sein d'un procédé d'assistance de direction de type connu, la mise en oeuvre de l'invention pouvant alors s'appliquer en rattrapage par une simple « greffe », sur l'architecture existante, des modules de programmation correspondant aux étapes (a) de détermination de l'accélération et (b) d'adaptation de consigne, afin de réaliser l'amplification conditionnelle de la consigne de base, du genre « courant de rappel », qui est, elle, invariante quelle que soit l'accélération longitudinale, et déjà mise à disposition du réseau de bord 9 présent par le système d'assistance de direction existant.

De manière plus globale, il est donc particulièrement aisé et peu onéreux de mettre en oeuvre l'invention, qui peut revenir en définitive à prévoir une modification du gain proportionnel, selon une fonction croissante de l'accélération, dans une boucle d'asservissement du rappel du volant qui peut être du reste déjà implantée sur le véhicule concerné.

De préférence, le procédé, et plus particulièrement l'étape (b) d'adaptation, comprend une première sous-étape (b2) d'écrêtage au cours de laquelle on écrête, à un premier seuil de saturation prédéterminé, le signal de pré-consigne, avant détermination du gain d'amplification, et/ou une seconde sous-étape (b3) d'écrêtage au cours de laquelle on écrête, à un second seuil de saturation prédéterminé, le signal de consigne corrigée après amplification.

Avantageusement, un tel bornage supérieur des signaux permet de majorer l'ampleur de la compensation apportée à la consigne, et/ou l'intensité de la consigne finale, et par conséquent de fixer un plafond d'effort de rappel effectivement appliqué.

On évite ainsi notamment, par un bridage sécuritaire de la fonction d'adaptation, de type « valeur haute », tout risque d'erreur ou d'excès dans la correction et plus globalement tout risque d'incident dans l'assistance à la conduite, et en particulier l'apparition d'une éventuelle sur-compensation qui serait sinon susceptible de gêner la manoeuvre du volant ou d'occasionner des manoeuvres automatiques aléatoires dudit volant.

De préférence, le procédé comprend par ailleurs une étape (d) de commutation permettant d'activer ou au contraire d'inhiber sélectivement l'étape (b) d'adaptation de consigne.

Plus particulièrement, tel que cela est illustré sur la figure 2, on pourra envisager une commutation entre trois configurations de traitement possibles :
- une première configuration (en haut du commutateur sur la figure 2) correspondant à l'application de la consigne corrigée, c'est-à-dire à l'activation ou à tout le moins à la prise en considération de l'étape (b) d'adaptation de la consigne en fonction de l'accélération longitudinale,
- une seconde position (en bas du commutateur sur la figure 2) correspondant à l'application directe, sans adaptation, de la pré-consigne, qui est utilisée en l'état pour définir l'effort de rappel, sans influence de l'accélération longitudinale,
- une troisième position (intermédiaire sur la figure 2) permettant d'inhiber totalement la fonction de rappel, dans certains cas particuliers où l'installateur ou l'utilisateur du système de direction assistée en décide ainsi.

La commutation d'activation de l'étape (b) d'adaptation, et plus particulièrement la sélection alternative entre rappel "ordinaire" par pré-consigne ou rappel "adapté" par consigne corrigée, pour tenir compte de l'accélération longitudinale, pourra éventuellement être automatique, et notamment commandée par la détection du franchissement d'un seuil d'accélération, et plus particulièrement d'une valeur d'accélération basse en deçà de laquelle on considère que l'effet naturel de centrage est suffisamment significatif et perceptible pour ne pas nécessiter d'amplification, et au-delà de laquelle il est en revanche préférable d'adapter la consigne en l'amplifiant.

Au demeurant, on notera que, par précaution, le bridage procuré par la seconde étape (b3) d'écrêtage peut avantageusement être commun aux différentes configurations susmentionnées, c'est-à-dire appliqué systématiquement, en aval de la commutation, quelle que soit l'origine du signal de consigne (de base ou corrigé), de sorte à pouvoir sécuriser systématiquement la consigne de rappel finale envoyée au moteur d'assistance.

Toute méthode d'acquisition peut bien entendu être envisagée pour déterminer l'accélération longitudinale, par exemple une mesure directe à l'aide d'un capteur spécifique de type accéléromètre inertiel, ou bien une évaluation indirecte, par tout calcul cinématique ou dynamique approprié, à partir d'un ou plusieurs paramètres de roulage.

De préférence, l'étape (a) de détermination de l'accélération longitudinale comportera à cet effet une sous-étape (a1) d'acquisition de la vitesse longitudinale du véhicule, puis une sous-étape (a2) de calcul de dérivée de ladite vitesse.

Avantageusement, on peut ainsi déterminer, au moyen d'une opération très simple à programmer, le paramètre d'accélération qui sert de critère d'appréciation et de quantification pour l'adaptation de la consigne de rappel, et ce de surcroît sur la base d'un signal représentatif de vitesse qui est déjà disponible sur le réseau CAN 9, car mesuré ou calculé par un ou des autres systèmes embarqués sur le véhicule.

En particulier, la vitesse longitudinale, ou vitesse linéaire, du véhicule pourra notamment être appréciée par exemple par un capteur de type compteur de vitesse placé en sortie de boîte de vitesses, ou encore, de façon particulièrement préférentielle, par la vitesse des roues surveillée par un système antiblocage ABS, sans qu'il soit nécessaire d'implanter un capteur dédié supplémentaire.

Le cas échéant, le signal représentatif de la vitesse pourra être converti ou normalisé, par exemple par multiplication par un facteur 10/36 pour exprimer en m/s sa valeur initialement fournie en km/h.

De préférence, l'étape (a) de détermination de l'accélération longitudinale comporte par ailleurs une sous-étape (a3) de filtrage, qui précède la sous-étape (a2) de calcul de dérivée, et au cours de laquelle on filtre le signal représentatif de la vitesse du véhicule au moyen d'un filtre passe-bas, du genre filtre Bellanger du second ordre, de préférence à fréquence de coupure (*Fréq. Coupure*) ajustable.

Avantageusement, un tel filtrage permet d'éliminer le bruit correspondant aux fréquences élevées, situées au-delà de la fréquence de coupure, bruit qui serait susceptible de fausser l'estimation de la valeur d'accélération longitudinale par dérivation, et, partant, de générer une erreur dans la correction applicable, par exemple en induisant une sur-compensation.

La possibilité d'ajuster une ou des caractéristiques du filtre, et notamment la fréquence de coupure, le cas échéant de manière dynamique, permet avantageusement d'optimiser la précision de la détermination d'accélération.

Par ailleurs, selon une caractéristique préférentielle qui peut constituer une invention à part entière, on pourra, au cours de l'étape (a) d'adaptation, prendre également en considération la valeur mesurée ou estimée de l'accélération latérale du véhicule pour ajuster la consigne de rappel.

Ainsi, on pourrait par exemple détecter le franchissement d'un seuil d'accélération latérale, ou encore prendre en considération le quotient de l'accélération longitudinale par l'accélération latérale, et ce, par exemple, afin de limiter ou réduire la consigne de rappel si l'accélération latérale augmente en phase d'accélération longitudinale du véhicule, ce qui indique en principe que le véhicule est effectivement engagé dans un virage.

On pourra également limiter voire restreindre l'effort de rappel si le véhicule subit une accélération latérale (de type force centrifuge) élevée, notamment au-delà d'un seuil prédéfini, et ce notamment afin d'améliorer le ressenti du conducteur au niveau du volant 1, en rendant ledit ressenti plus "linéaire".

En définitive, l'ajustement de la consigne de rappel pourra prendre en considération deux paramètres d'accélération, et plus particulièrement la composante longitudinale d'accélération et la composante transverse de ladite accélération, normale à la précédente, une telle prise en considération, particulièrement complète, contribuant à affiner la loi d'assistance de direction.

Bien entendu, l'invention n'est nullement limitée à une variante de réalisation particulière, l'homme du métier ayant notamment la possibilité d'isoler ou de combiner entre elles les différentes caractéristiques décrites plus haut.

Par ailleurs, la présente invention concerne bien entendu également un véhicule automobile, et notamment un véhicule automobile terrestre destiné au transport individuel ou collectif de personnes ou de marchandises, qui embarque un calculateur 8, du genre module électronique, agencé ou programmé pour mettre en oeuvre un procédé tel que décrit plus haut.

L'invention concerne enfin un programme informatique contenant des éléments de code de programme informatique permettant la mise en oeuvre d'un procédé conforme à l'invention lorsque ledit programme est exécuté sur un calculateur, ainsi qu'un support de données lisible par un calculateur, du genre disque, mémoire flash, clef USB, etc. contenant des éléments de code de programme informatique permettant la mise en oeuvre d'un tel procédé lorsque ledit support est lu par un calculateur.

## Revendications

1. Procédé d'assistance à la manoeuvre d'un volant de conduite (1) de véhicule, au cours duquel on élabore une consigne de rappel (*consigne rappel final*) quantifiant un effort de rappel destiné à être appliqué audit volant de conduite afin d'assister le rappel dudit volant vers une position centrale prédéterminée, ledit procédé comportant au moins une étape (a) de détermination d'accélération longitudinale au cours de laquelle on évalue l'accélération longitudinale instantanée du véhicule, puis une étape (b) d'adaptation de consigne de rappel au cours de laquelle on ajuste la consigne de rappel du volant en fonction de ladite accélération longitudinale instantanée, ledit procédé étant **caractérisé en ce que**, lors de l'étape (b) d'adaptation de consigne de rappel, on ajuste la consigne de rappel du volant selon une fonction croissante de l'accélération longitudinale, de manière à augmenter l'intensité de l'effort de rappel si ladite accélération longitudinale augmente et/ou si ladite accélération longitudinale dépasse un seuil prédéterminé.

2. Procédé selon la revendication 1 **caractérisé en ce que**, l'étape (b) d'adaptation comprend une sous-étape (b1) d'amplification variable au cours de laquelle on associe à la valeur d'accélération instantanée, selon une loi ou un abaque pré-établi, un gain d'amplification qui varie en fonction de ladite valeur d'accélération, puis on applique ledit gain à un signal de base formant une pré-consigne, elle-même calculée de préférence indépendamment de l'accélération longitudinale, sur la base d'un ou plusieurs paramètres de roulage tels que la vitesse du véhicule, la vitesse de rotation du volant, la position angulaire du volant et/ou le couple exercé par le conducteur sur le volant, de sorte à obtenir une consigne corrigée.

3. Procédé selon la revendication 2 **caractérisé en ce que** l'étape d'adaptation comprend une première sous-étape d'écrêtage au cours de laquelle on écrête, à un premier seuil de saturation prédéterminé, le signal de pré-consigne, avant détermination du gain d'amplification, et/ou une seconde sous-étape d'écrêtage au cours de laquelle on écrête, à un second seuil de saturation prédéterminé, le signal de consigne corrigée après amplification.

4. Procédé selon l'une des revendications précédentes **caractérisé en ce qu'**il comprend une étape (d) de commutation permettant d'activer ou au contraire d'inhiber sélectivement l'étape (b) d'adaptation de consigne.

5. Procédé selon l'une des revendications précédentes **caractérisé en ce que** l'étape (a) de détermination de l'accélération longitudinale comporte une sous-étape (a1) d'acquisition de la vitesse longitudinale du véhicule, puis une sous-étape (a2) de calcul de dérivée de ladite vitesse.

6. Procédé selon la revendication 5 **caractérisé en ce que** l'étape (a) de détermination de l'accélération longitudinale comporte une sous-étape (a3) de filtrage, qui précède la sous-étape (a2) de calcul de dérivée, et au cours de laquelle on filtre le signal représentatif de la vitesse du véhicule au moyen d'un filtre passe-bas, du genre filtre Bellanger du second ordre, de préférence à fréquence de coupure (*Fréq. Coupure)* ajustable.

7. Procédé selon l'une des revendications précédentes **caractérisé en ce que**, au cours de l'étape (a) d'adaptation, on prend également en considération la valeur mesurée ou estimée de l'accélération latérale du véhicule pour ajuster la consigne de rappel.

8. Véhicule automobile **caractérisé en ce qu'**il embarque un calculateur (8) agencé ou programmé pour mettre en oeuvre un procédé selon l'une ou l'autre des revendications 1 à 7.

9. Support de données lisible par un calculateur et contenant des éléments de code de programme informatique permettant la mise en oeuvre d'un procédé selon l'une ou l'autre des revendications 1 à 7 lorsque ledit support est lu par un calculateur.

## Patentansprüche

1. Verfahren zur Unterstützung beim Manövrieren eines Fahrzeuglenkrads (1), in dessen Verlauf man einen Rückstellsollwert (*consigne rappel final*) erstellt, der eine Rückstellkraft quantifiziert, die dazu bestimmt ist, an das Lenkrad angelegt zu werden, um das Zurückstellen des Lenkrads zu einer vorbestimmten zentralen Position zu unterstützen, wobei das Verfahren mindestens einen Schritt (a) des Bestimmens der Längsbeschleunigung umfasst, in dessen Verlauf man die Momentan-Längsbeschleunigung des Fahrzeugs beurteilt, dann einen Schritt (b) des Anpassens des Rückstellsollwerts, in dessen Verlauf man den Rückstellsollwert des Lenkrads in Abhängigkeit von der Momentan-Längsbeschleunigung einstellt, Verfahren **dadurch gekennzeichnet, dass** man bei dem Schritt (b) des Anpassens des Rückstellsollwerts den Rückstellsollwert des Lenkrads gemäß einer steigenden Funktion der Längsbeschleunigung derart einstellt, dass die Stärke der Rückstellkraft erhöht wird, falls die Längsbeschleunigung zunimmt, und/oder, falls die Längsbeschleunigung einen vorbestimmten Schwellenwert überschreitet.

2. Verfahren nach Anspruch 1, **dadurch gekennzeichnet, dass** der Schritt (b) der Anpassung einen Unterschritt (b1) des variablen Verstärkens umfasst, in dessen Verlauf man mit dem Momentan-Beschleunigungswert gemäß einem Gesetz oder vorab festgelegten Nomogramm einen Verstärkungsgewinn assoziiert, der in Abhängigkeit von dem Beschleunigungswert variiert, man dann die Verstärkung auf ein Basissignal, das einen Vorsollwert bildet, der selbst vorzugsweise unabhängig von der Längsbeschleunigung berechnet wird, auf der Basis eines oder mehrerer Fahrparameter, wie zum Beispiel der Geschwindigkeit des Fahrzeugs, der Drehzahl des Lenkrads, der Winkelposition des Lenkrads und/oder des Drehmoments, das von dem Fahrer auf das Lenkrad ausgeübt wird, anwendet, so dass man einen korrigierten Sollwert erhält.

3. Verfahren nach Anspruch 2, **dadurch gekennzeichnet, dass** der Anpassungsschritt einen ersten Unterschritt der Spitzenbegrenzung umfasst, in dessen Verlauf man das Vorsollwertsignal auf einen ersten vorbestimmten Sättigungsschwellenwert begrenzt, bevor der Gewinn der Verstärkung bestimmt wird, und/oder einen zweiten Unterschritt der Spitzenbegrenzung, in dessen Verlauf man das korrigierte Sollwertsignal nach Verstärkung auf einen zweiten vorbestimmten Sättigungsschwellenwert begrenzt.

4. Verfahren nach einem der vorhergehenden Ansprüche, **dadurch gekennzeichnet, dass** es einen Schaltungsschritt (d) umfasst, der es erlaubt, selektiv den Schritt (b) des Sollwertanpassens zu aktivieren oder, im Gegenteil, zu unterbinden.

5. Verfahren nach einem der vorhergehenden Ansprüche, **dadurch gekennzeichnet, dass** der Schritt (a) des Bestimmens der Längsbeschleunigung einen Unterschritt (a1) des Erfassens der Längsgeschwindigkeit des Fahrzeugs, dann einen Unterschritt (a2) zur Berechnung der Ableitung der Geschwindigkeit umfasst.

6. Verfahren nach Anspruch 5, **dadurch gekennzeichnet, dass** der Schritt (a) des Bestimmens der Längsbeschleunigung einen Unterschritt (a3) des Filterns umfasst, der dem Unterschritt (a2) der Ableitungsberechnung vorangeht, und in dessen Verlauf man das Signal, das für die Geschwindigkeit des Fahrzeugs repräsentativ ist, mittels eines Tiefpassfilters des Typs Bellanger-Filter zweiter Ordnung vorzugsweise bei einstellbarer Abschaltfrequenz (*Fréq. Coupure)* filtert.

7. Verfahren nach einem der vorhergehenden Ansprüche, **dadurch gekennzeichnet, dass** man im Verlauf des Anpassungsschritts (a) auch den gemessenen oder geschätzten Wert der seitlichen Beschleunigung des Fahrzeugs berücksichtigt, um den Rückstellsollwert einzustellen.

8. Kraftfahrzeug, **dadurch gekennzeichnet, dass** es einen Rechner (8) an Bord mitführt, der eingerichtet oder programmiert ist, um ein Verfahren nach dem einem oder dem anderen der Ansprüche 1 bis 7 umzusetzen.

9. Datenträger, der durch einen Rechner lesbar ist und InformatikProgrammcodeelemente enthält, die das Umsetzen eines Verfahrens nach dem einem oder dem anderen der Ansprüche 1 bis 7 erlauben, wenn der Träger von einem Rechner gelesen wird.

## Claims

1. A method for assisting the operation of a vehicle steering wheel (1), during which is developed a return setpoint quantifying a return force intended to be applied to said steering wheel in order to assist the return of said steering wheel to a predetermined central position, said method including at least a step (a) for determining the longitudinal acceleration during which the instantaneous longitudinal acceleration of the vehicle is evaluated, then a step (b) for adapting a return setpoint during which the return setpoint of the steering wheel is adjusted depending on said instantaneous longitudinal acceleration, said method being **characterized in that**, during the step (b) for adapting a return setpoint, the return setpoint of the steering wheel is adjusted according to an increasing function of the longitudinal acceleration, so as to increase the intensity of the return force if said longitudinal acceleration increases and/or if said longitudinal acceleration exceeds a predetermined threshold.

2. The method according to claim 1 **characterized in that**, the adaptation step (b) comprises a variable amplification sub-step (b1) during which is associated with the instantaneous acceleration value, according to a law or a pre-established chart, an amplification gain which varies depending on said acceleration value, then said gain is applied to a base signal forming a pre-setpoint, wherein said pre-setpoint is preferably calculated independently of the longitudinal acceleration, on the basis of one or more driving parameter(s) such as the speed of the vehicle, the rotational speed of the steering wheel, the angular position of the steering wheel and/or the torque exerted by the driver on the steering wheel, so as to obtain a corrected setpoint.

3. The method according to claim 2 **characterized in that** the adaptation step comprises a first clipping sub-step during which the pre-setpoint signal is clipped to a first predetermined saturation threshold, before determining the amplification gain, and/or a second clipping sub-step during which the corrected setpoint signal is clipped to a second predetermined saturation threshold, after amplification.

4. The method according to any of the preceding claims **characterized in that** it comprises a commutation step (d) allowing to activate or, instead, to inhibit selectively the setpoint adaptation step (b).

5. The method according to any of the preceding claims **characterized in that** the step (a) for determining the longitudinal acceleration includes a sub-step (a1) for aquiring the longitudinal speed of the vehicle, then a sub-step (a2) for calculating derivative of said speed.

6. The method according to claim 5 **characterized in that** the step (a) for determining the longitudinal acceleration includes a filtering sub-step (a3), preceding the derivative calculating sub-step (a2), and during which the representative signal of the vehicle speed is filtered by means of a low pass filter, such as a Bellanger filter of the second order, preferably having an adjustable cutoff frequency *(Freq. Coupure).*

7. The method according to any of the preceding claims **characterized in that**, during the adaptation step (a), the measured or estimated value of the vehicle's lateral acceleration is also taken into account to adjust the return setpoint.

8. A motor vehicle **characterized in that** it embeds a calculator (8) arranged or programmed to implement a method according to either of claims 1 to 7.

9. A data medium readable by a calculator and containing computer program code elements enabling the implementation of a method according to either of claims 1 to 7 when said medium is read by a calculator.
